# DEMANDE DE BREVET EUROPEEN

(11) **EP 4 671 222 A1**
(43) Date de publication de la demande: **31.12.2025**
(21) Numéro de dépôt: 25186084.7
(22) Date de dépôt: 27.06.2025
(51) Int. Cl.: C04B 20/02, C04B 28/04, C04B 103/52

(54) **UTILISATION D'UN ADDITIF ORGANIQUE LORS DU BROYAGE D'UNE MATRICE ARGILEUSE CRUE**

(30) Priorité: 27.06.2024 FR 2407004
(71) Demandeur: Materrup, 40230 Saint-Geours-de-Maremne (FR)
(72) Inventeur: Neuville, Mathieu, 40140 Soustons (FR); Mercé, Manuel, 40230 Saint Vincent de Tyrosse (FR)
(74) Mandataire: A.P.I. Conseil

(57) **Abrégé**

L'invention concerne une utilisation d'un additif organique pendant le broyage d'au moins une matrice argileuse crue, caractérisée en ce que l'additif organique comporte un polymère défloculant présentant une masse moléculaire d'au moins 1000 g/mol et au moins 3 groupements chargés négativement à un pH supérieur à 7. L'invention concerne également une matrice argileuse crue broyée selon l'invention et un liant de construction utilisant une telle argile.

## Description

### Domaine technique

L'invention concerne le domaine de la construction. En particulier, l'invention concerne l'utilisation d'un additif organique pendant le broyage en combinaison avec au moins une matrice argileuse crue. Ainsi, l'invention concerne également un procédé de préparation d'une composition pour liant de construction et un procédé de préparation d'un liant de construction.

L'invention concerne en outre une composition pour liant de construction comportant une matrice argileuse crue qui a été broyée en présence d'un additif organique selon l'invention. L'invention concerne également un liant de construction et un matériau de construction formé à partir de cette matrice argileuse crue broyée.

### Technique antérieure

Le ciment est la deuxième ressource la plus consommée au monde, avec plus de 4 milliards de tonnes produites chaque année dans le monde. Cette consommation est en constante augmentation, portée par la demande croissante de logements et d'infrastructures. Le ciment est notamment utilisé pour la fabrication d'éléments de maçonnerie qui reposent sur des matériaux cimentaires en tant que liants. En raison du développement constant de nouvelles infrastructures dans la plupart des pays du monde, il existe une demande permanente pour l'approvisionnement en liants de construction, plus particulièrement des matières premières pour la formation de ciment Portland. Cependant, la production et l'utilisation du ciment Portland est associée à une empreinte environnementale élevée. Le ciment utilisé dans le domaine de la construction est généralement un ciment Portland. C'est un liant hydraulique qui, mélangé à de l'eau, durcit et prend en masse. Après durcissement, le ciment conserve sa résistance ainsi que sa stabilité et cela même exposé à l'eau. Il existe une grande variété de ciments utilisés par le monde. Néanmoins, tous les ciments conventionnels comportent un clinker à un pourcentage variant de 5 % pour certains ciments de hauts fourneaux à un minimum de 95 % pour le ciment Portland qui est le ciment aujourd'hui le plus utilisé par le monde. Le clinker résulte de la cuisson d'un mélange composé d'environ 80 % de calcaire et de 20 % d'aluminosilicates (tels que des argiles). Cette cuisson, la clinkérisation, se fait généralement à une température de plus de 1200°C, un tel processus de préparation de ciments implique donc une forte consommation énergétique. De plus, la conversion chimique du calcaire en chaux libère également du dioxyde de carbone. En conséquence, l'industrie du ciment génère environ 8% des émissions mondiales de CO₂.

En effet, il est estimé que la fabrication d'un liant de construction de type Portland génère en moyenne 0,8 kg de CO₂ par kg de clinker de ciment Portland produit. Différentes solutions ont donc été développées pour tenter de remplacer au moins partiellement certains composants des liants de construction utilisés pour la formation des ciments de type Portland. Ces solutions visent principalement à réduire l'empreinte carbone.

L'argile a été évitée jusqu'à récemment car de faibles concentrations suffisaient à interagir négativement avec des superplastifiants tels que les PCE utilisés dans les bétons. Ainsi, dans le béton, les argiles brutes ont été longtemps considérées comme une impureté apportée par exemple par les granulats (e.g. sable). Une faible teneur en argile inhibe l'effet des plastifiants et superplastifiants et a un impact négatif sur la demande en eau du béton. Cela induit une forte augmentation de la quantité d'eau nécessaire pour obtenir un écoulement donné, aboutissant à une perte de performances mécaniques sur le produit durci. Pourtant, il a été montré récemment que la préparation de liant de construction à partir d'argile crue, ajoutée avant même l'ajout de charges, pouvait permettre la génération de matériaux de construction présentant des niveaux élevés de résistance mécanique (WO22157209, EP3932886, WO20178538, WO20141285).

De nouvelles méthodes utilisant l'argile ont été proposées en vue d'améliorer les propriétés mécaniques des matériaux de construction à base d'argile tout en ayant un faible taux carbone. Par exemple, la demande de brevet internationale WO2022/200284 propose notamment d'utiliser un additif de mouture lors du broyage de ce dernier avec un matrice argileuse, ayant subi, de préférence, un traitement thermique entre 500 et 1200°C. Toutefois, cette solution reste insatisfaisante car, l'argile utilisée préférentiellement subit un traitement thermique, augmentant ainsi son impact écologique. En outre, les matériaux proposés montrent une résistance à la compression à 28j de 12,6 MPa au maximum. Ce qui ne satisfait pas aux exigences du métier.

Depuis, de nouveaux liants de construction et matériaux comportant une quantité significative d'argile crue sont en cours de développement et permettent d'atteindre des empreintes carbones largement réduites. Toutefois, afin de favoriser leur démocratisation, ces solutions bas carbones doivent pouvoir présenter une résistance mécanique au jeune âge élevée de façon à ce que les procédés industriels puissent substituer sans conséquence du ciment Portland par ces solutions bas carbone.

Ainsi, il existe un besoin pour de nouveaux matériaux de construction à base d'argile crue présentant des propriétés mécaniques améliorées à jeune âge (c'est-à-dire dans les premières 24 heures ou après quelques heures).

### Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Cependant, ce résumé ne constitue pas un aperçu exhaustif de tous les aspects, modes de réalisation et exemples de l'invention. Son seul but est de présenter des aspects, modes de réalisation et exemples sélectionnés de l'invention sous une forme concise en guise d'introduction à la description plus détaillée des aspects, modes de réalisation et exemples de l'invention qui suivent le résumé.

L'invention vise en particulier une utilisation d'un additif organique pendant le broyage d'au moins une matrice argileuse crue, caractérisée en ce que l'additif organique comporte un polymère défloculant présentant une masse moléculaire d'au moins 1000 g/mol et au moins 3 groupements chargés négativement à un pH supérieur à 7.

La demanderesse a sélectionné un additif organique capable, lorsqu'il est utilisé lors du broyage d'une matrice argileuse crue, d'améliorer la performance de la matrice argileuse crue broyée utilisée pour la fabrication d'un liant de construction puis d'un matériaux de construction. En particulier, cela permet d'améliorer les performances de retrait d'un matériau de construction utilisant de cette matrice argileuse crue broyée selon l'invention. L'additif organique selon l'invention est utilisé pendant le broyage. C'est à dire qu'il peut être ajouté avant le broyage ou au cours du broyage (après l'initiation mais avant la fin du broyage). Il est illustré dans la partie expérimentale que cela permet d'obtenir de meilleures performances par rapport à un ajout après l'étape de broyage.

Selon d'autres caractéristiques optionnelles de l'utilisation de l'additif organique, ce dernier peut inclure facultativement une ou plusieurs des caractéristiques suivantes, seules ou en combinaison :
- le polymère défloculant présente une masse moléculaire d'au moins 2000 g/mol, de préférence au moins 5000 g/mol, de façon plus préférée au moins 9 000 g/mol, de façon encore plus préférée au moins 14 000 g/mol, par exemple au moins 22 000 g/mol ;
- le polymère défloculant présente au moins 5, de préférence au moins 7, de façon plus préférée au moins 9, de façon encore plus préférée au moins 10 groupements chargés négativement à un pH supérieur à 7 ;
- les groupements chargés négativement à un pH supérieur à 7 sont des groupements sulfonates et/ou carboxylate, de préférence sulfonates ;
- le polymère défloculant présente un rapport masse moléculaire sur nombre de groupements chargés négativement à un pH supérieur à 7, inférieur ou égal à 2000 ;
- le polymère défloculant présente un rapport masse moléculaire sur nombre de groupements chargés négativement à un pH supérieur à 7, est supérieur ou égal à 200 ;
- le polymère défloculant présente un indice de polydispersité inférieur à 5, de préférence inférieur à 4 et de façon plus préférée inférieur à 3 ;
- le polymère défloculant comporte une ou plusieurs chaines poly(oxyéthylène) ou poly(oxypropylène), les chaines poly(oxyéthylène) ou poly(oxypropylène) présentant une masse moléculaire d'au moins 200 g/mol ;
- le polymère défloculant présente un rapport entre un nombre de fonction sulfonate sur un nombre de chaines latérales non chargées d'au moins 2:1 ;
- le polymère défloculant a été formé à partir de monomères comportant un groupement mélamine sulfonate ; De façon plus préférée, la chaine principale du polymère défloculant comporte des groupements mélamine sulfonate reliés par des liaisons covalentes ; De façon encore plus préférée, la chaine principale du polymère défloculant est comporte une séquence répétée de noyaux mélamine sulfonate reliés par des liaisons covalentes.
- le broyage est un broyage à sec, c'est-à-dire que lors du broyage la matrice argileuse crue présente une teneur en eau inférieure ou égale à 5% ; de préférence inférieure ou égale à 3%, de façon plus préférée inférieure ou égale à 2%, de façon encore plus préférée inférieure ou égale à 1%.
- l'additif de broyage est ajouté sous la forme de poudre, d'une solution ou d'une suspension pulvérisée sur la matrice argileuse crue en entrée de broyage ;
- l'additif de broyage comporte en outre des alkanolamines et/ou des triethanolamines telles que triisopropanolamine (TIPA), triethanolamine (TEA), et diethanolisopropanolamine (DEIPA) ;
- le broyage est réalisé sur une ou plusieurs matrices argileuses crues et au moins une matrice argileuse crue comporte des nodules de matière avec une dureté de MOHS supérieure ou égale à 5, de préférence supérieure à 5. Cela correspond typiquement à la présence de nodules de quartz ou feldspaths.
- le broyage est réalisé sur plusieurs matrices argileuses crues et au moins une matrice argileuse crue comporte des nodules de matière avec une dureté de MOHS supérieure ou égale à 5, de préférence supérieure à 5 (cela correspond typiquement à la présence de nodules de quartz ou feldspaths), tandis qu'au moins une matrice argileuse crue ne comporte pas de nodules de matière avec une dureté de MOHS supérieure ou égale à 5.
- l'additif organique est ajouté à une première matrice argileuse crue puis ladite première matrice argileuse crue est co broyée avec une autre matrice argileuse crue. Alternativement, ou en combinaison, l'additif organique est ajouté à une première matrice argileuse crue puis ladite première matrice argileuse crue est co broyé avec d'autres constituant du liant de construction tel qu'un ou plusieurs activateurs et/ou un ou plusieurs précurseurs.

Selon un autre aspect, l'invention porte sur une matrice argileuse crue broyée susceptible d'être obtenue suite à une utilisation selon l'invention. Par exemple, une matrice argileuse crue broyée obtenue suite à une utilisation selon l'invention. En particulier, elle porte sur une matrice argileuse crue broyée présentant une D10 comprise entre 3 et 9 µm, une D50 comprise entre 15 et 250 µm, et une D90 comprise entre 110 et 180 µm (bornes incluses).

Selon un autre aspect, l'invention porte sur un procédé de fabrication d'un liant de construction comportant :
- une étape de broyage d'une matrice argileuse crue en présence d'un additif organique, l'additif organique comportant un polymère défloculant présentant une masse moléculaire d'au moins 1000 g/mol et au moins 3 groupements chargés négativement à un pH supérieur à 7 ;
- une étape de mélange de la matrice argileuse crue broyée avec d'autres constituants du liant de construction, par exemple mélange avec au moins un précurseur et/ou mélange de la matrice argileuse crue broyée avec au moins un activateur.

Selon un autre aspect, l'invention porte sur un liant de construction susceptible d'être obtenue par un procédé de fabrication de liant de construction selon l'invention. En particulier, l'invention porte sur un liant de construction comprenant une matrice argileuse crue broyée selon l'invention ainsi qu'un ou plusieurs activateurs et/ou un ou plusieurs précurseurs. De façon préférée, ladite matrice argileuse crue broyée selon l'invention présentant un profil granulométrique tel que décrit par la suite.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente une illustration schématique d'un procédé de fabrication d'une composition pour liant de construction selon un mode de réalisation selon la présente l'invention.
[Fig. 2] La figure 2 représente une illustration schématique d'un procédé de fabrication d'un matériau de construction selon un mode de réalisation de la présente l'invention.

### Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Le terme « **liant** » ou « **liant de construction** » au sens de l'invention peut être compris comme une formulation permettant d'assurer l'agglomération de matériaux entre eux, notamment lors de la prise, puis du durcissement d'un matériau de construction. Ainsi, il permet en particulier d'assurer l'agglomération du sable et autres constituants du matériau de construction avec les constituants du liant. Le liant selon l'invention est en particulier un liant hydraulique, c'est-à-dire que le durcissement se fait au contact de l'eau.

L'expression « **matrice argileuse** », au sens de l'invention peut correspondre à un ou plusieurs matériaux rocheux à base de silicates hydratés ou d'aluminosilicates de structure lamellaire, ladite matrice argileuse étant composée de particules fines provenant en général de l'altération de silicates à charpente tridimensionnelle, tels que les feldspaths. Une matrice argileuse peut ainsi comporter un mélange de tels matériaux rocheux pouvant par exemple consister en de la kaolinite, de l'illite, de la smectite, de la bentonite, de la chlorite, de la vermiculite, ou leurs mélanges. En outre, une matrice argileuse peut comporter des limons.

Au sens de l'invention, l'expression « **matrice argileuse crue** », pourra correspondre à une matrice argileuse n'ayant pas subi d'étape de calcination. Ainsi, elle peut aussi être appelée matrice argileuse non calcinée. Par exemple, cela correspond à une matrice argileuse n'ayant pas subi une montée en température supérieure à 300°C, de préférence supérieure à 200°C et plus préférentiellement une température supérieure à 150°C. En effet, la matrice argileuse crue peut subir une étape de séchage par chauffage nécessitant une montée en température généralement sensiblement égale ou inférieure à 150°C mais pas d'étape de calcination. Une matrice argileuse crue peut de préférence comporter un mélange de matériaux rocheux pouvant par exemple comporter de la kaolinite, de l'illite, de la smectite, micas tels que la muscovite, de la bentonite, de la chlorite, de la vermiculite, ou leurs mélanges, ainsi que des limons.

Dans la suite de la description, le terme « % **en poids** » en lien avec la composition pour liant, en lien avec le liant, ou bien en lien avec le matériau de construction, doit être compris comme étant une proportion par rapport au poids sec de la composition, du liant ou du matériau de construction respectivement. Le poids sec peut, par exemple, correspondre au poids avant l'addition d'eau par exemple nécessaire à la formation du matériau de construction. Lorsque les valeurs de % en poids sont données sous la forme d'intervalles, les bornes sont comprises sauf si le contraire est spécifié.

Au sens de l'invention, un « **défloculant** », peut correspondre à un composé capable de dissocier des agrégats et des colloïdes notamment en suspension aqueuse. Des agents défloculant ont par exemple été utilisés dans un contexte de forage ou d'extraction pétrolière pour rendre l'argile plus fluide et faciliter l'extraction ou le forage. L'expression « **défloculant organique** » peut correspondre à un défloculant comportant au moins un atome de carbone et de préférence au moins une liaison carbone-oxygène. L'expression « **polymère défloculant** » peut correspondre au sens de l'invention à un agent défloculant comportant au moins une répétition de monomère.

Le terme « **monomère** » correspond, au sens de l'invention, à une molécule ou un composé chimique qui peut s'assembler de manière répétitive pour former une structure polymérique plus grande.

Le terme « **oligomère** » correspond, au sens de l'invention, à une molécule ou un composé chimique formé par la liaison d'au moins deux monomères, mais avec un nombre de répétitions inférieur à celui requis pour être considéré comme un polymère.

Le terme « **polymère** » correspond, au sens de l'invention, à une macromolécule composée de nombreuses unités monomères identiques liées chimiquement les unes aux autres de manière répétée, formant ainsi une structure de grande taille et de poids moléculaire élevé. Par exemple, un polymère peut comporter au moins 10 monomères.

Au sens de l'invention, une « **chaine principale** », aussi désignée sous le terme de squelette peut correspondre à la séquence continue de liaisons covalentes reliant les monomères entre eux pour former le polymère. Cette structure linéaire ou parfois ramifiée constitue l'ossature d'un polymère, sur laquelle les différentes propriétés physiques, chimiques et mécaniques du matériau se fondent.

Au sens de l'invention, une « **chaine latérale** » d'un polymère peut correspondre aux groupes fonctionnels ou aux segments de polymère qui sont attachés à la chaîne principale, mais qui ne font pas partie intégrante de la séquence répétitive de monomères constituant le squelette principal. Ces chaînes latérales peuvent varier en longueur, en structure chimique, et en fonctionnalité.

Au sens de l'invention, l'expression « **noyau mélamine** » peut correspondre à un fragment moléculaire dérivé de la mélamine, un composé organique trimérique de formule brute C₃H₆N₆. Ainsi, un noyau mélamine comporte généralement un cycle triazine pouvant être substitué.

Au sens de l'invention, l'expression « **mélamine sulfonate** » peut correspondre à un dérivé fonctionnalisé de la mélamine où un ou plusieurs groupes sulfonates (-SO₃-) sont liés directement ou indirectement à l'azote des groupes amines de la molécule de mélamine.

Les termes « **groupement** », « **groupement fonctionnel** » ou « **groupement chimique** » correspond au sens de l'invention est un ensemble d'atomes liés dans une molécule qui confère des propriétés et des réactivités spécifiques à cette molécule.

Le terme « **groupement chargé négativement** » correspond au sens de l'invention à groupement comportant au moins un atome qui comporte au moins une charge négative due à la présence d'ions ou d'électrons supplémentaires.

Au sens de l'invention, l'expression « **masse molaire** / **moléculaire moyenne** » peut correspondre à une mesure statistique de la masse moyenne des molécules dans un échantillon d'un polymère. De préférence au sens de l'invention la masse moléculaire moyenne correspond à la masse moléculaire moyenne en poids (Mw). Elle est de préférence mesurée selon les indications de la norme ISO16014 :2019.

Le terme « **D50** » correspond au diamètre médian pour lequel 50% (en volume ou en masse, de préférence en masse) des grains, particules, granulats ou sédiments ont une taille inférieure à un diamètre donné. À titre d'exemple, une méthode d'analyse par tamisage et par sédimentométrie indique une D50 = 5,8 mm, alors 50 % des particules de l'échantillon (en volume ou en masse, de préférence en masse) sont supérieures à 5,8 mm. D50 est généralement utilisé pour représenter la taille des particules d'un groupe de particules. La D50 est de préférence mesurée selon la norme ASTM D422-63 ou selon la norme ASTM D6913-04(2009) ou notamment pour les particules fines la norme ISO 13320:2020 (e.g. D10 ou <65 µm). Les expressions « propriété granulométrique » ou « profil granulométrique » ou « distribution de taille de particules » pourront correspondre à des valeurs de paramètres relatifs à la distribution de taille de particules, par exemple dans la matrice argileuse crue ou dans les terres crues. Il existe de nombreux de paramètres relatifs à la distribution de taille de particules tel que la D50, D10, D90.

Le terme « **sensiblement égal »** au sens de l'invention correspond à une valeur variant de moins de 20 % par rapport à la valeur comparée, de préférence de moins de 10 %, de façon encore plus préférée de moins de 5 %.

Le domaine de la construction se doit de faire évoluer ses procédés de fabrication de béton afin de proposer des bétons

L'invention propose d'utiliser un additif organique lors du broyage d'une matrice argileuse crue destinée à être utilisée dans un liant de construction. En effet, la demanderesse a découvert de manière surprenante que l'utilisation d'un additif organique, de préférence comportant un polymère défloculant aux caractéristiques particulières, pendant l'étape de broyage avec une matrice argileuse crue permet d'obtenir un matériau de construction ayant des propriétés de retrait améliorées.

Ainsi, l'invention concerne l'utilisation d'un additif organique pendant le broyage avec au moins une matrice argileuse crue. L'utilisation d'un additif organique comportant un polymère défloculant aux caractéristiques particulières permet par exemple la formation d'un liant de construction amélioré et des matériaux de construction intégrant ce liant avec des propriétés de retrait améliorées.

Selon un **premier aspect,** l'invention porte sur l'utilisation d'un additif organique pendant le broyage d'au moins une matrice argileuse crue. De préférence, l'additif organique comporte un polymère défloculant, ledit polymère défloculant présente une masse moléculaire d'au moins 1000 g/mol et au moins 3 groupements chargés négativement à un pH supérieur à 7.

### Additif organique

Avantageusement, un additif organique utilisé selon la présente invention comporte au moins un polymère défloculant. En outre, un additif organique peut comporter au moins un autre composé organique ou inorganique autre que l'au moins un polymère défloculant comme il sera présenté ci-dessous.

### Polymère défloculant

L'utilisation d'un ou de plusieurs défloculant(s) peut améliorer les performances du matériau formé à partir de la matrice argileuse crue ainsi broyée.

Un polymère défloculant utilisé selon l'invention, peut présenter une masse moléculaire d'au moins 1000 g/mol, de préférence d'au moins 2000 g/mol, de façon plus préférée d'au moins 5000 g/mol, de façon encore plus préférée d'au moins 9 000 g/mol, de façon encore plus préférée d'au moins 14 000 g/mol. Par exemple, le polymère défloculant utilisé peut présenter une masse moléculaire d'au moins 22 000 g/mol.

Le polymère défloculant utilisé peut présenter au moins 5 groupements chargés négativement, de préférence au moins 7 groupements chargés négativement, de façon plus préférée au moins 9 groupements chargés négativement, de façon encore plus préférée au moins 10 groupements chargés négativement.

De préférence, les groupements chargés négativement du polymère défloculant utilisé peuvent être sélectionnés parmi des groupements sulfonates et/ou carboxylate, de préférence les sulfonates.

En outre, le polymère défloculant utilisé peut comporter une ou plusieurs chaines poly(oxyéthylène) ou poly(oxypropylène). De façon préférée, ces chaines poly(oxyéthylène) et poly(oxypropylène) présentent une masse moléculaire d'au moins 200 g/mol. Ces chaines latérales peuvent présenter une masse moléculaire d'au moins 300 g/mol, par exemple d'au moins 500 g/mol.

Le polymère défloculant utilisé peut comporter une ou plusieurs chaines latérales portant des insaturations. Ainsi, le polymère utilisé peut comporter des chaines latérales comportant au moins une insaturation, de préférence au moins deux insaturations.

De préférence, le polymère défloculant peut avoir été formé à partir de monomères pouvant comporter un groupement mélamine sulfonate.

Avantageusement, le polymère défloculant peut présenter un rapport entre sa masse moléculaire et son nombre de groupements chargés négativement inférieur ou égal à 2000 de préférence inférieur ou égal à 1800, de façon plus préférée inférieur ou égal à 1600 et de façon encore plus préférée inférieur ou égal à 1400. En effet, cela est particulièrement avantageux lors de l'utilisation avec des matrices argileuses crues.

Avantageusement, le polymère défloculant présente un rapport entre sa masse moléculaire sur son nombre de groupements chargés négativement à un pH supérieur à 7, est supérieur ou égale à 200 de façon préférée supérieur ou égal à 220, de façon plus préférée supérieur ou égal à 240 et de façon encore plus préférée supérieur ou égal à 260. En effet, cela est particulièrement avantageux lors de l'utilisation avec des matrices argileuses crues.

En outre, le polymère défloculant peut présenter un indice de polydispersité inférieur à 5, de préférence inférieur à 4 et de façon plus préférée inférieur à 3.

Avantageusement, le polymère défloculant présente des fonctions sulfonate. En outre, le polymère défloculant peut présenter un rapport entre un nombre de fonction sulfonate sur un nombre de chaines latérales non chargées d'au moins 2:1.

De préférence, le polymère défloculant comporte des monomères contenant un noyau mélamine, ledit polymère défloculant présentant une chaîne principale formée d'une séquence répétitive où les noyaux mélamine sont liés entre eux par des liaisons covalentes. Le polymère défloculant peut également comporter des monomères contenant un noyau naphtalène, ledit polymère défloculant présentant une chaîne principale formée d'une séquence répétitive où les noyaux naphtalène sont liés entre eux par des liaisons covalentes. Ainsi, le polymère défloculant peut être sélectionné parmi les polymélamine sulphonate (PMS), ou les polynaphtalène sulphonate (PNS), d'au moins 1000 g/mol et comportant au moins 3 groupements chargés négativement à un pH supérieur à 7.

Une méthode reproductible pour déterminer le nombre absolu de charges anioniques portées par un additif organique, en particulier un polymère défloculant notamment par une chaîne de polycarboxylate éther (PCE), de polymélamine sulfonate (PMS) ou de polynaphtalène sulfonate (PNS) commence par la mesure de la masse moléculaire moyenne en nombre par chromatographie par perméation de gel (GPC) à triple détecteur. En comparant cette masse moyenne à la masse connue de l'unité répétitive ionisable, il est possible de calculer le nombre d'unités répétitives - et donc le nombre de charges négatives - présentes dans chaque chaîne. Un polymère comportant un seul groupe anionique par unité de répétition porte une charge négative pour chaque unité de répétition incorporée dans son squelette. La GPC à triple détecteur fournit la masse moléculaire moyenne en nombre de la chaîne. Une fois cette masse moyenne connue, l'analyste consulte les masses moléculaires publiées ou confirmées expérimentalement des unités ionisables concernées : unités de type acide acrylique pour le PCE, unités de mélamine sulfonée pour le PMS et unités de naphtalène sulfoné pour le PNS. La division de la masse moyenne de la chaîne par la masse d'une unité ionisable donne le nombre de ces unités, et donc le nombre de charges négatives, par chaîne. Si un copolymère contient des unités chargées et non chargées, il faudrait en premier lieu déterminer la fraction molaire de l'unité chargée par spectroscopie RMN du proton ou par analyse du soufre élémentaire, puis appliquer la même division à la partie chargée du squelette.

### Autre composé organique

Un additif organique utilisé selon l'invention peut comporter en outre au moins un autre composé organique, qui ne serait pas un polymère défloculant selon l'invention.

Par exemple, l'au moins un autre composé utilisé dans l'additif organique peut être sélectionné parmi des alcanolamines, glycols, glycérol, sucres, acides de sucre, acides carboxyliques ou leurs sels, polymères superabsorbants, ou leur mélange.

Par exemple, les alcanolamines utilisés selon l'invention peuvent être sélectionnés parmi la monoéthanolamine, la diéthanolamine, la triéthanolamine (TEA), la diéthanolisopropanolamine (DEIPA), l'éthanoldiisopropanolamine (EDIPA), l'isopropanolamine, la diisopropanolamine, la triisopropanolamine (TIPA), la N-méthyldiisopropanolamine (MDIPA), la N-méthyldiéthanolamine (MDEA), la tétrahydroxyéthyléthylènediamine (THEED) la tétrahydroxyisopropyléthylènediamine (THIPD), ainsi que des mélanges de deux ou plus de ces alcanolamines.

De façon préférée, les alcanolamines utilisés selon l'invention peuvent être sélectionnés parmi : la triisopropanolamine (TIPA), la N-méthyldiisopropanolamine (MDIPA), la N-méthyldiéthanolamine (MDEA), la tétrahydroxyéthyléthylènediamine (THEED), la diéthanolisopropanolamine (DEIPA), la tétrahydroxyisopropyléthylènediamine (THIPD), ainsi que des mélanges de deux ou plus de ces alcanolamines.

De façon plus préférée, un additif organique peut comporter en outre des alcanolamines sélectionné parmi triethanolamines telles que triisopropanolamine (TIPA), triethanolamine (TEA), et/ou diethanolisopropanolamine (DEIPA).

Des exemples de glycols appropriés pour l'additif organique sont le monoéthylèneglycol, le diéthylèneglycol, le triéthylèneglycol, le tétraéthylèneglycol, le pentaéthylèneglycol, le polyéthylèneglycol (e.g. PEG 200), le néopentylglycol, le hexylèneglycol, le propylèneglycol, le dipropylèneglycol et le polypropylèneglycol. Il est également possible d'utiliser des mélanges de deux ou plusieurs glycols différents ainsi que d'au moins un glycol et du glycérol.

Des exemples de sucres susceptibles d'être incorporés à l'additif organique utilisé lors du broyage incluent des monosaccharides et des disaccharides. Parmi les exemples appropriés, on peut citer l'allose, l'altrose, l'arabinose, la cellobiose, la chitobiose, le fructose, le galactose, le glucose, le glycéraldéhyde, le gulose, l'idose, l'isomaltose, le lactose, le lactulose, le lyxose, le maltose, la mannobiose, le mannose, le palatinose, le raffinose, le ribose, le saccharose, le sorbose, le tallose, le thréose, le tréhalose, le xylose, la xylobiose, ainsi que leurs mélanges.

Dans le contexte de la présente invention, un "acide de sucre" est un monosaccharide possédant un groupe carboxyle. Des exemples d'acides de sucre utiles dans le cadre de la présente invention incluent, sans s'y limiter, l'acide ascorbique, l'acide galacturonique, l'acide gluconique, l'acide glucuronique, l'acide glycérique, l'acide iduronique, l'acide mucique, l'acide néuraminique, l'acide saccharique, l'acide tartrique et l'acide xylonique. L'acide de sucre peut se présenter sous forme d'acide libre ou de sel.

Les acides carboxyliques pouvant être utilisés dans l'additif organique en combinaison avec le polymère défloculant et particulièrement préférés sont l'acide oxalique, l'acide malonique, l'acide adipique, l'acide lactique, l'acide citrique et l'acide tartrique. L'acide carboxylique peut se présenter sous forme d'acide libre ou sous forme de sel.

Selon des modes de réalisation, les sels d'acides de sucre et/ou les sels d'acide carboxylique peuvent être des sels avec des métaux des groupes la, Ila, Ib, Ilb, IVb, VIIIb du tableau périodique des éléments. Les sels préférés d'acides de sucre et/ou les sels d'acide carboxylique sont des sels de métaux alcalins, de métaux alcalino-terreux, de fer, de cobalt, de cuivre ou de zinc.

Des exemples de polymères superabsorbants utiles dans le contexte de la présente invention incluent, sans s'y limiter, des polymères naturels tels que l'amidon, la cellulose (y compris l'éther de cellulose), la chitine ou le collagène, les alginates, et des polymères synthétiques tels que le poly(méthacrylate d'hydroxyéthyle), le poly(éthylène glycol) ou le poly(oxyde d'éthylène) ou des polymères synthétiques ioniques tels que l'acide polyacrylique (PAA), l'acide polyméthacrylique (PMAA), les polyacrylamides (PAM), l'acide polylactique (PLA), le polyéthylèneimine, l'alcool polyvinylique (PVA) ou le polyvinylpyrrolidone (PVP).

Les polymères superabsorbants particulièrement adaptés dans le cadre de la présente invention sont des polymères superabsorbants ioniques, en particulier ceux à base de polyacrylamide modifié avec de l'acide acrylique, qui peuvent être de structure linéaire ou réticulée.

Avantageusement, un additif organique selon l'invention comporte au moins 70 % en poids sec d'un polymère défloculant, de préférence au moins 75% en poids sec d'un polymère défloculant et de façon plus préférée au moins 80% en poids d'un polymère défloculant. Un additif organique selon l'invention comporte 100 % en poids sec d'un polymère défloculant, de préférence au plus 95 % en poids sec d'un polymère défloculant, et de façon plus préférée au plus 90% en poids d'un polymère défloculant. Un additif organique selon l'invention comporte de 70% à 100 % en poids sec d'un polymère défloculant, de préférence de 75 % à 95 % en poids sec d'un polymère défloculant, de façon encore plus préférée de 80 % à 90 % en poids d'un polymère défloculant.

Un additif organique utilisé selon l'invention comporte 0% en poids de l'au moins un autre composé organique ou inorganique, de préférence au moins 5% en poids de l'au moins un autre composé organique ou inorganique et de façon plus préférée au moins 10 %. Un additif organique utilisé selon l'invention comporte au plus 30% en poids de l'au moins un autre composé organique ou inorganique, de préférence au plus 25% en poids de l'au moins un autre composé organique ou inorganique et de façon plus préférée au plus 20 %. Un additif organique utilisé selon l'invention comporte de 0% à 30% en poids de l'au moins un autre composé organique ou inorganique, de préférence de 5% à 25 % en poids de l'au moins un autre composé organique ou inorganique et de façon plus préférée de 10 % à 20 %.

Les additifs organiques sont ajoutés à la matrice argileuse crue avant et/ou pendant le broyage dans une quantité totale comprise entre 0,001 et 3 % en poids, de préférence entre 0,002 et 1 % en poids, et plus préférablement entre 0,01 et 0,1 % en poids, dans chaque cas par rapport au poids sec total de la matrice argileuse crue.

### Matrice argileuse crue

Comme mentionné précédemment, l'invention porte sur l'utilisation d'un additif organique pendant le broyage d'une matrice argileuse crue.

La matrice argileuse crue utilisée peut par exemple comporter au moins une espèce minérale sélectionnée parmi : Illite, Kaolinite, Smectite, Bentonite, Vermiculite, Chlorite, Montmorillonites, Muscovite, Halloysite, Sépiolite, et Attapulgite. Par exemple, la matrice argileuse crue peut par exemple comporter au moins 5%, de façon préférée au moins 15% et d'une façon encore plus préférée au moins 20 % en poids d'une espèce minérale sélectionnée parmi : Illite, Kaolinite, Smectite, Bentonite, Vermiculite, Chlorite, Montmorillonites, Muscovite, Halloysite, Sépiolite, et Attapulgite.

De façon préférée, la matrice argileuse crue utilisé peut comporter au moins deux types d'argiles sélectionnés parmi : Illite, Kaolinite, Smectite, Bentonite, Vermiculite, Chlorite, Montmorillonites, Muscovite, Halloysite, Sépiolite, et Attapulgite. Cela inclut les argiles dites interstratifiées qui sont des combinaisons complexes de plusieurs argiles. Encore plus préférée, la matrice argileuse crue comporte au moins une espèce minérale sélectionnée parmi : Kaolinite, Illite, Smectite, Bentonite, Chlorite Montmorillonites, et Vermiculite.

Le tableau 1 ci-dessous présente les caractéristiques chimiques de ces espèces minérales.

**[Tableau 1]**

| | **Type d'argile** | **Composition** |
|---|---|---|
| Matrice Argileuse Crue | Illite | (K, H₃O)(Al, Mg, Fe)₂(Si,Al)₄O₁₀[(OH)₂,(H₂O)] |
| | Smectite | (Na,Ca)_{0,3}(Al,Mg)₂Si₄O₁₀(OH)₂, n H₂O |
| | Kaolinite | Al₂Si₂O₅(OH)₄ |
| | Bentonite | (Na,Ca)_{0,3}(Al, Mg)₂Si₄O₁₀(OH)₂ |
| | Vermiculite | (Mg,Ca)_{0,7}(Mg,Fe,Al)₆(Al,Si)₈°₂₂(OH)₄, n H₂O |
| | Chlorite | (Fe,Mg,Al)₆(Si,Al)₄°₁₀(OH)8 |
| | Muscovite | KAl₂(AlSi₃O₁₀) (OH,F)₂ |
| | Halloysite | Al₂Si₂O₅(OH)₄ |
| | Sépiolite | Mg₄Si₆O₁₅(OH)₂, n H₂O |
| | Attapulgite | (Mg,Al,Fe³⁺)₅[Si₈O₂₀](OH)₂ (OH2)₄ n H₂O |

Selon un mode préféré, la matrice argileuse crue utilisée comporte au moins deux types d'argiles différents et comportera de la smectite (Smectite, Bentonite, Montmorillonites), de la kaolinite, et/ou de l'illite.

En particulier, une matrice argileuse crue selon la présente invention pourra comporter au moins 25 % de kaolinite et/ou d'illite. Les matrices argileuses crues comportant une majorité de kaolinite et/ou d'illite auront la préférence dans le cadre de la présente invention. Cela peut par exemple correspondre à une matrice argileuse comportant plus de 25 % de kaolinite et plus de 25% d'illite, ou encore une matrice argileuse comportant plus de 40 % de kaolinite et plus de 10% d'illite. Ainsi, une matrice argileuse crue selon la présente invention comportera de préférence au moins 50% en poids sec de kaolinite et/ou d'illite, de façon plus préférée au moins 70% en poids sec de kaolinite et/ou d'illite.

La matrice argileuse crue peut présenter une quantité de CaO supérieure ou égale à 2%. De préférence, la matrice argileuse crue présente une quantité de CaO supérieure ou égale à 4%, de façon plus préférée supérieure ou égale à 6%, de façon encore plus préférée supérieure ou égale à 8%, par exemple supérieure ou égale à 10%. La quantité de CaO peut être mesurée par exemple par diffraction de rayons X, spectrométrie par fluorescence X ou spectrométrie d'absorption atomique.

La matrice argileuse crue peut présenter une quantité de K₂O inférieure ou égale à 5%. De préférence, la matrice argileuse crue présente une quantité de K₂O inférieure ou égale à 3%, de façon plus préférée inférieure ou égale à 2%, de façon encore plus préférée inférieure ou égale à 1.5%. La quantité de K₂O peut être mesurée par exemple par diffraction de rayons X, spectrométrie par fluorescence X ou spectrométrie d'absorption atomique.

La matrice argileuse crue peut présenter une quantité de Na₂O inférieure ou égale à 2%. De préférence, la matrice argileuse crue présente une quantité de Na₂O inférieure ou égale à 1,5%, de façon plus préférée inférieure ou égale à 1%, de façon encore plus préférée inférieure ou égale à 0.5%. La quantité de Na₂O est par exemple mesurée par diffraction de rayons X, spectrométrie par fluorescence X ou spectrométrie d'absorption atomique.

La matrice argileuse crue peut présenter une quantité de SiO₂ supérieure ou égale à 30%. De préférence, la matrice argileuse crue présente une quantité de SiO₂ supérieure ou égale à 35%, de façon plus préférée supérieure ou égale à 40%, de façon encore plus préférée supérieure ou égale à 45%, par exemple supérieure ou égale à 48%. La quantité de SiO₂ est par exemple mesurée par diffraction de rayons X, spectrométrie par fluorescence X ou spectrométrie d'absorption atomique.

De façon plus préférée, la matrice argileuse crue utilisée selon l'invention comprend des nodules de matière avec une dureté élevée, généralement composés de quartz ou de feldspaths, ayant une dureté supérieure ou égale à 5 sur l'échelle de Mohs. Une méthode pour la mesure de la dureté des nodules est la diffraction des rayons X pour confirmer la composition des nodules : quartz ou feldspath. En pratique, une analyse DRX de l'argile permet de vérifier que les nodules correspondent à des phases minérales de dureté élevée. Une autre méthode peut comporter les étapes suivantes : Prélever une fraction grossière retenue sur le tamis de 2 mm ; Rincer les nodules sélectionnés à l'eau déionisée, éliminer les particules non adhérentes à l'aide d'une brosse souple et sécher l'échantillon à 105 °C jusqu'à obtention d'une masse constante ; Pour les fragments de moins de 10 mm environ (donc facultatif), enrober une face dans un bloc de résine époxy et polir la surface exposée jusqu'à obtenir une finition au carbure de silicium P600. Cela permet d'obtenir une zone d'essai plane et rigide qui résiste aux mouvements lors des rayures ; Effectuer le test de dureté conformément à la norme ASTM C1895. À l'aide de pointes de référence de Mohs ou de minéraux numérotés de 4 à 9, maintenez le stylet à un angle de 45° par rapport à la surface et appliquez une force normale d'environ 10 N tout en traçant un trait droit de 5 mm ; Commencez par la référence la plus dure et progressez vers les niveaux plus mous, en effectuant au moins trois traits à chaque valeur de dureté ; Examinez chaque trait sous un grossissement optique 10×. Une rayure valide est une rainure qui reste visible après un léger frottement des doigts. Pour chaque fragment, notez le niveau de dureté le plus élevé qui ne raye pas la surface ou, alternativement, le niveau le plus bas qui produit une rayure. Suite à cette procédure, la dureté des nodules est exprimée sous forme d'un intervalle entier, par exemple « 6 < H ≤ 7 », calculé comme le résultat médian d'un minimum de cinq fragments (ASTM C1895-20 ). Alternativement ou en complément, la personne du métier peut mettre en place une cartographie AFM + DRX de la dureté des nodules silicatés dans une matrice argileuse crue. La mesure nanomécanique par microscopie à force atomique (AFM) peut par exemple être calibrée sur des plages de module allant de 0,7 MPa à 70 GPa en mode PeakForce-QNM (PF-QNM) ou pour des matériaux plus rigides (par exemple ≥ 70 GPa), le Contact Resonance AFM (CR-AFM) étend la mesure du module jusqu'à plusieurs centaines de gigapascals. Ainsi, il est possible de distinguer des grains durs (par exemple E ≈ 65-75 GPa) du reste de la matrice argileuse (par exemple E < 30 GPa). Cette analyse peut faire l'objet d'une validation croisée via par exemple une micro-indentation Vickers sur les mêmes grains. Ainsi, les nodules durs peut être identifiés par cartographie nanomécanique AFM. Chaque nodule présente (i) un module réduit ≥ 60 GPa mesuré en mode PeakForce-QNM (ISO 14577-4) (ii) une dureté d'indentation locale déduite d'une courbe force-indentation ; et/ou (iii) une signature cristallographique correspondant au quartz ou aux feldspaths confirmée par micro-diffraction X. Ainsi, une stratégie AFM (par exemple PF-QNM ou CR-AFM) peut fournir une cartographie directe, quantitative et répétable de la dureté des nodules silicatés dans la matrice argileuse (ISO 14577). Le couplage à la micro-diffraction X peut ajouter l'identification de phase, permettant de relier sans ambiguïté la résistance mécanique mesurée à la nature minéralogique des nodules.

Aussi, les nodules peuvent être qualifiés (mesure de leur dureté) et quantifiés grâce à des techniques de microscopie électronique à balayage (SEM), de diffraction des rayons X (XRD), ou encore de tomographie par ordinateur (Micro-CT). Ainsi, une argile particulièrement adaptée à l'invention pourra être sélectionnée sur la base de sa composition minéralogique. Elle sera en particulier caractérisée par la présence de nodules de quartz et/ou de feldspaths avec une dureté élevée. Par exemple, la présence de nodule ayant une dureté de MOHS supérieure ou égale à 5, de préférence supérieure ou égale à 6. En effet, les inventeurs ont montré que la présence de nodules ayant une telle dureté dans la matrice argileuse, combinée à l'utilisation d'un additif organique selon l'invention permettait à performance équivalente du liant de construction de réduire l'énergie allouée au broyage et la quantité d'additif organique. Cela conduit à un liant de construction ayant une empreinte carbone encore plus faible.

Le type d'argile pourra être déterminé par les méthodes connues de la personne du métier. En particulier, il sera possible d'utiliser de la diffractométrie des rayons X. Par exemple les conditions suivantes pourront être utilisées :
- Appareillage : Diffractomètre, par exemple un BRUKER D8 ADVANCE^{®} (Géométrie Bragg-Brentano) ; par exemple présentant les réglages suivants : Tube au Cuivre (λ Kα1 ≈ 1.54 Å) Puissance du générateur : 40 kV, 40 mA ; Optiques primaires : fente fixe 0.16° ; fente de Soller 2.5° ; Optique secondaire : fente de Soller 2.5° ; Détecteur LynXeye XE-T ^{®}
- Paramètres d'acquisition : Balayage de 4 à 90°2θ ; Vitesse de balayage de 0,03°2θ/seconde, Temps de comptage : 480 secondes par pas ; Echantillon tournant.

De façon préférée, la matrice argileuse crue utilisée dans le cadre de l'invention comprend au moins 20 % en poids de Smectite, d'Illite et/ou de Kaolinite, par exemple au moins 30 % en poids de Smectite, d'Illite et/ou de Kaolinite, de façon préférée au moins 40 % en poids de Smectite, d'Illite et/ou de Kaolinite, de façon plus préférée au moins 50 % en poids de Smectite, d'Illite et/ou de Kaolinite et de façon encore plus préférée au moins 60 % en poids de Smectite, d'Illite et/ou de Kaolinite. Le pourcentage en poids correspondant au pourcentage cumulé de Smectite, d'Illite et de Kaolinite.

En particulier, une matrice argileuse selon l'invention peut comprendre entre 20 et 80 % en poids de Smectite, d'Illite et/ou de Kaolinite, de façon préférée entre 30 et 70 % en poids de Smectite, d'Illite et/ou de Kaolinite ou entre 40 et 60 % en poids de Smectite, d'Illite et/ou de Kaolinite, de façon plus préférée entre 40 et 60 % en poids de Smectite, d'Illite et/ou de Kaolinite. De façon préférée, la Smectite pourra être de la Montmorillonite.

Avantageusement, la matrice argileuse crue utilisée pour le broyage peut comporter au moins 2 % en poids de particules de limon, de préférence au moins 4 % en poids, de façon plus préférée au moins 6 % en poids. Par exemple, la matrice argileuse crue peut comporter au plus 50 % en poids de particules de limon, de préférence au plus 30 % en poids, de façon plus préférée au plus 20 % en poids. Par exemple, la matrice argileuse crue peut comporter de 2 % à 50 % en poids de particules de limon, de préférence de 4 % à 30 % en poids, de façon plus préférée de 6 % à 20 % en poids. Les particules de limon sont en particulier des particules présentant un diamètre compris entre 2 µm et 200 µm.

La matrice argileuse crue utilisée pour le broyage peut comporter au moins 1 % en poids de sable, de préférence au moins 2 % en poids, de façon plus préférée au moins 3 % en poids. Par exemple, la matrice argileuse crue pourra comporter au plus 70 % en poids de sable, de préférence au plus 50 % en poids, de façon plus préférée au plus 40 % en poids. Par exemple, la matrice argileuse crue utilisée peut comporter de 1 % à 70 % en poids de particules de sable, de préférence de 2 % à 50 % en poids, de façon plus préférée de 3 % à 40 % en poids. Le sable correspond en particulier des particules présentant un diamètre compris entre 63 µm et 2 mm.

La matrice argileuse crue utilisée pour le broyage peut, de façon préférée, correspondre au moins en partie à une terre argileuse excavée, de préférence une terre argileuse excavée non calcinée, telle qu'une terre argileuse excavée crue traitée.

Au moins une matrice argileuse crue est broyée en présence de l'additif organique et avantageusement, au moins deux matrices argileuses crues peuvent être broyée en présence de l'additif organique. Ainsi, dans le cadre de l'invention, au moins deux matrices argileuses crues avec des profils granulométriques différents sont utilisées pour le broyage. Par exemple, une première matrice argileuse crue et une seconde matrice argileuse crue peuvent avoir deux D50 distinctes. Par exemple, la première matrice argileuse crue peut avoir une D50 de supérieure à 1000 µm et une deuxième matrice argileuse crue peut avoir une D50 inférieure à 1000 µm. De préférence, la première matrice argileuse crue peut avoir une D50 de supérieure à 1000 µm et une deuxième matrice argileuse crue peut avoir une D50 inférieure à 500 µm. De façon plus préférée, la première matrice argileuse crue peut avoir une D50 de supérieure à 800 µm et une deuxième matrice argileuse crue peut avoir une D50 inférieure à 400 µm. De façon plus préférée, la première matrice argileuse crue peut avoir une D50 de supérieure à 400 µm et une deuxième matrice argileuse crue peut avoir une D50 inférieure à 400 µm.

Comme cela a été décrit la matrice argileuse crue est broyée avec un additif organique, ledit additif organique comportant au moins un polymère défloculant. Il est à noter que la matrice argileuse crue utilisée peut avoir subi un autre traitement sélectionné parmi : triage, tamisage et/ou séchage. Avantageusement, le broyage peut être réalisé avec un broyeur ou un concasseur tel que par exemple un broyeur à marteaux, un broyeur à boulets ou encore un broyeur à barres.

Ainsi, selon un autre aspect, l'invention porte sur une matrice argileuse crue broyée. Cette matrice argileuse crue broyée l'a été en présence d'un additif organique comportant un polymère défloculant présentant une masse moléculaire d'au moins 1000 g/mol et au moins 3 groupements chargés négativement à un pH supérieur à 7.

Cette matrice argileuse crue broyée comportant un additif organique selon l'invention peut présenter un profil granulométrique particulièrement adapté à la préparation d'un liant de construction. Le profil granulométrique est mesuré par La D50 est de préférence mesurée selon la norme ASTM D422-63 ou selon la norme ASTM D6913-04(2009) ou notamment pour les particules fines la norme ISO 13320:2020 (e.g. D10 ou <65 µm).

En particulier, la matrice argileuse crue broyée comportant un additif organique selon l'invention peut présenter une D90 inférieure ou égale à 200 µm. De préférence, une D90 inférieure ou égale à 180 µm, de façon plus préférée une D90 inférieure ou égale à 160 µm, et de façon plus préférée une D90 inférieure ou égale à 150 µm. La matrice argileuse crue broyée comportant un additif organique selon l'invention peut présenter une D90 supérieure ou égale à 100 µm. De préférence, une D90 supérieure ou égale à 110, de façon plus préférée une D90 supérieure ou égale à 115 µm et de façon plus préférée une D90 supérieure ou égale à 120 µm. La matrice argileuse crue broyée comportant un additif organique selon l'invention peut présenter une D90 allant de 100 à 200 µm. De préférence, une D90 allant de 110 à 180 µm, de façon plus préférée une D90 allant de 115 à 160 µm, et de façon plus préférée une D90 allant de 120 à 150 µm.

En particulier, la matrice argileuse crue broyée comportant un additif organique selon l'invention peut présenter une D50 inférieure ou égale à 500 µm. De préférence, une D50 inférieure ou égale à 400 µm, de façon plus préférée une D50 inférieure ou égale à 250 µm, et de façon plus préférée une D50 inférieure ou égale à 100 µm ou de façon encore plus préférée inférieure ou égale à 50 µm, de manière plus préférée inférieure ou égale à 45 µm.

La matrice argileuse crue broyée comportant un additif organique selon l'invention peut présenter une D50 supérieure ou égale à 5 µm. De préférence, une D50 supérieure ou égale à 10 µm, de façon plus préférée une D50 supérieure ou égale à 15 µm, et de façon plus préférée une D50 supérieure ou égale à 20 µm, et de façon encore plus préférée supérieure à 40 µm. Cela permet de limiter les contraintes sur les outils productifs industriels dédiés au broyage.

La matrice argileuse crue broyée comportant un additif organique selon l'invention peut présenter une D50 allant de 10 à 500 µm. De préférence, une D50 allant de 15 à 250 µm, de façon plus préférée une D50 allant de 20 à 150 µm, et de façon plus préférée une D50 allant de 20 µm à 50 µm. La présence d'une argile broyée de façon à atteindre de tels diamètres peut permettre d'améliorer la performance du liant de construction et du matériau de construction selon l'invention.

En particulier, la matrice argileuse crue broyée comportant un additif organique selon l'invention peut présenter une D10 inférieure ou égale à 10 µm. De préférence, une D10 inférieure ou égale à 9 µm, de façon plus préférée une D10 inférieure ou égale à 8 µm, et de façon plus préférée une D10 inférieure ou égale à 7 µm. La matrice argileuse crue broyée comportant un additif organique selon l'invention peut présenter une D10 supérieure ou égale à 2 µm. De préférence, une D10 supérieure ou égale à 3, de façon plus préférée une D10 supérieure ou égale à 4 µm. La matrice argileuse crue broyée comportant un additif organique selon l'invention peut présenter une D10 allant de 2 à 10 µm. De préférence, une D10 allant de 3 à 9 µm, de façon plus préférée une D10 allant de 4 à 8 µm, et de façon plus préférée une D10 allant de 4 à 7 µm.

La matrice argileuse crue broyée selon l'invention est particulièrement adaptée pour la fabrication d'une composition pour liant de construction ou pour la fabrication d'un liant de construction. Avantageusement, comme cela est illustré dans les exemples, la matrice argileuse crue broyée selon l'invention présente une D10 allant de 3 à 9 µm, une D50 allant de 15 à 250 µm, une D90 allant de 110 à 180 µm. De façon préférée, la matrice argileuse crue broyée selon l'invention présente une D10 allant de 4 à 8 µm, une D50 allant de 20 à 150 µm et une D90 allant de 115 à 160 µm. De façon encore plus préférée, la matrice argileuse crue broyée selon l'invention présente une D10 allant de 4 à 7 µm, une D50 allant de 20 µm à 50 µm et une D90 allant de 120 à 150 µm.

Ainsi, selon **un autre aspect,** l'invention porte sur une composition pour liant de construction comportant la matrice argileuse crue broyée selon l'invention. En particulier, l'invention porte sur un liant de construction comportant la matrice argileuse crue broyée selon l'invention.

Pour former un liant de construction, la matrice argileuse crue broyée selon l'invention peut être complétée notamment par au moins un précurseur et/ou au moins un activateur.

Ainsi, une composition pour liant selon l'invention peut comporter, outre la matrice argileuse crue broyée : un ou plusieurs précurseurs, un ou plusieurs activateurs, une ou plusieurs charges, un ou plusieurs additifs tels que des agents entraîneurs d'air, des retardateurs, des accélérateurs, des adjuvants réduisant le retrait, et/ou des adjuvants modificateurs de viscosité.

En particulier, la composition pour liant de construction selon l'invention peut comporter un ou plusieurs précurseurs et/ou un ou plusieurs activateurs. De façon préférée, un liant de construction selon l'invention peut comporter un ou plusieurs précurseurs et un ou plusieurs activateurs.

Ainsi, selon **un autre aspect,** l'invention porte sur un **matériau de construction** obtenu à partir d'une composition selon l'invention et plus particulièrement d'un liant de construction selon l'invention.

En particulier, la présente invention porte sur un matériau de construction caractérisé en ce qu'il comporte une matrice argileuse crue broyée. Cette matrice argileuse crue broyée l'a été en présence d'un additif organique comportant un polymère défloculant présentant une masse moléculaire d'au moins 1000 g/mol et au moins 3 groupements chargés négativement à un pH supérieur à 7.

De préférence, le matériau de construction comporte au moins 10 % en poids sec de matrice argileuse crue broyée selon l'invention par rapport au poids sec du liant de construction.

### Granulats

Un matériau de construction selon la présente invention peut comporter des granulats.

Classiquement les granulats peuvent correspondre à des granulats naturels, des granulats artificiels ou encore à des granulats recyclés.

Les granulats peuvent en outre comporter des granulats minéraux, c'est-à-dire principalement constitués de matière minérale et/ou des granulats végétaux, c'est-à-dire principalement constitués de matière d'origine végétale. Les granulats peuvent aussi comporter des granulats marins, c'est-à-dire principalement constitués de matière organique ou inorganique provenant des fonds marins telles que des granulats siliceux et/ou des substances calcaires (e.g. maërl et sables coquilliers).

Les granulats minéraux peuvent par exemple correspondent à du sable, des gravillons, des graviers, des fillers (ou matériaux fins), des poudres, déchets fossilisés et à leur combinaison.

Les granulats végétaux peuvent par exemple correspondre à du bois (copeaux ou fibres), du chanvre, de la paille, de la chènevotte de chanvre, du miscanthus, du tournesol, du typha, du maïs, du lin, des balles de riz, des balles de blé, du colza, des algues, du bambou, la ouate de cellulose, du tissu défibré et à leur combinaison

En particulier, lorsque le matériau de construction selon l'invention comporte des granulats végétaux, ledit matériau comporte de préférence au moins 0,1 % en poids de granulats végétaux, de préférence au moins 0,2 % en poids de granulats végétaux, de façon plus préférée au moins 0,5% en poids de granulats végétaux, et de façon encore plus préférée au moins 0,7% en poids de granulats végétaux.

Selon un autre aspect, l'invention porte sur un procédé de fabrication 100 d'une composition pour liant de construction selon l'invention.

Dans certains cas le liant de construction sera directement assemblé dans un matériau de construction. Dans d'autres utilisations, une composition pour liant de construction peut être préparée extemporanément.

Le procédé de fabrication 100 selon l'invention peut être mis en oeuvre avec des dispositifs ou systèmes habituellement utilisés pour la fabrication de liant de construction ou de matériaux de construction.

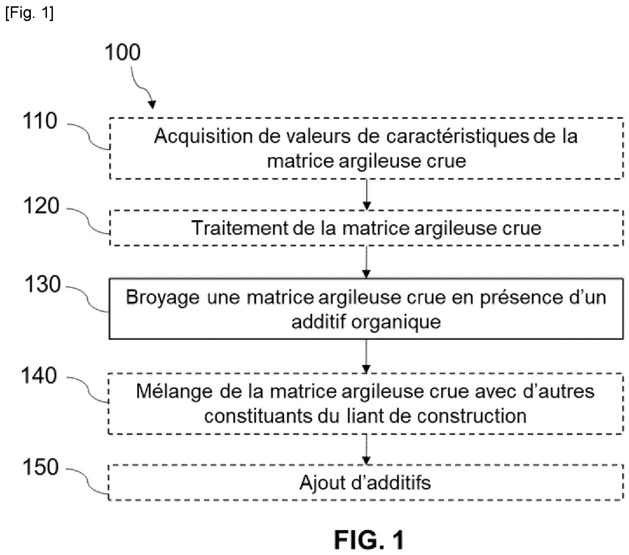

Comme illustré à la **figure 1****,** le procédé de fabrication 100 selon l'invention comporte les étapes suivantes : une étape de broyage 130 d'une matrice argileuse crue en présence d'un additif organique, l'additif organique comporte un polymère défloculant présentant une masse moléculaire d'au moins 1000 g/mol et au moins 3 groupements chargés négativement à un pH supérieur à 7. De préférence, le polymère défloculant comporte des monomères contenant une fonction sulfonate.

En outre, le procédé de fabrication 100 peut comporter les étapes suivantes : une étape d'acquisition 110 de valeurs de caractéristiques de la matrice argileuse crue, une étape de traitement 120 de la matrice argileuse crue, une étape de mélange 140 avec d'autres constituants du liant de construction, et une étape d'ajout d'additifs 150.

Le procédé de fabrication 100 selon l'invention peut comporter une **étape d'acquisition 110 de valeurs de caractéristiques de la matrice argileuse crue.** Une étape d'acquisition 110 peut être mise en en oeuvre par un analyseur. Un analyseur peut être sélectionné parmi : un spectromètre (infrarouge, RMN, Raman, Fluorescence X, de masse), un diffractomètre à rayon X, un microscope (à transmission, à balayage), et/ou d'autres capteurs optiques. En particulier, cette étape peut comporter une mesure de la valeur de LOI et/ou des teneurs en Al₂O₃, CaO, Fe₂O₃, K₂O, MgO, Na₂O, SiO₂, SO₃, TiO₂ dans la matrice argileuse crue. En particulier, cela peut comporter une mesure des teneurs en CaO, K₂O, et/ou Na₂O dans la matrice argileuse crue ou encore en une mesure de la valeur de LOI de la matrice argileuse crue.

L'étape de d'acquisition 110 peut également comporter l'utilisation de méthodes classiques d'étude de la distribution particulaire. Elles peuvent comporter l'utilisation de tamis et de sédimentation (e.g. hygromètre, méthode à la pipette) et être réalisée par exemple en suivant les indications de la norme ASTM D422-63, ASTM D6913-04, ISO 13320:2020, NF X31-107 et éventuellement la norme NF EN 933-1.

L'étape d'acquisition 110 peut être suivi d'une étape d'adaptation de la quantité de polymère défloculant utilisé ou de sa structure moléculaire. Cela permet généralement d'améliorer la performance du liant de construction produit en prenant en compte les caractéristiques de la matrice argileuse crue. Cela peut permettre d'augmenter la résistance mécanique du liant de construction produit.

Comme illustré à la figure 1, le procédé de fabrication 100 selon l'invention peut comporter une **étape de traitement 120 de la matrice argileuse crue.**

Comme illustré à la [Fig.1], le procédé de fabrication 100 selon l'invention peut comporter une étape de traitement 120 de la matrice argileuse crue. En particulier, l'étape de traitement 120 de la matrice argileuse crue peut comporter une modification des teneurs des différentes fractions granulométriques de la matrice argileuse crue.

L'étape de traitement 120 permet généralement de préparer la matière première de façon à ce que le liant de construction présente une durée de cure réduite et des performances mécaniques améliorées.

En particulier, la matrice argileuse crue peut avantageusement avoir été prétraitée. De préférence, le prétraitement est sélectionné parmi : premier broyage, triage, tamisage et/ou séchage de la matrice argileuse. De préférence, le prétraitement est sélectionné parmi : premier broyage, triage, tamisage et/ou séchage de la matrice argileuse crue. Le prétraitement peut par exemple comporter un fractionnement.

L'étape de traitement 120 peut être réalisée généralement avec des démotteurs, sécheurs, cribles, et/ou broyeurs.

Le séchage peut notamment permettre une réduction du taux d'humidité de la matrice argileuse crue sans réaliser de montée en température supérieure à 500°C. Le sécheur peut, par exemple, être sélectionné parmi un sécheur rotatif.

La matrice argileuse crue séchée peut avantageusement subir une étape de criblage par exemple au sein d'un crible. Cette étape permettra de préférence d'éliminer les granulats présentant un diamètre supérieur ou égal à 2 cm, de façon plus préférée un diamètre supérieur ou égal à 1 cm. Le crible peut être, par exemple, sélectionné parmi un crible rotatif.

Un procédé de fabrication 100 selon l'invention comporte une étape de broyage 130 d'une matrice argileuse crue en présence d'un additif organique tel que décrit ci-dessus.

L'additif organique peut avoir été ajouté à la matrice argileuse crue avant le début de l'étape de broyage. Alternativement, il est ajouté pendant le broyage.

Le broyage peut par exemple être réalisé grâce à un broyeur à marteaux, un broyeur à boulets ou encore un broyeur à barres. Comme cela sera détaillé, le broyage peut être réalisé de façon à contrôler la D50 des matières utilisées.

De façon préférée, lors de la formation de la composition pour liant de construction, la matrice argileuse crue peut présenter une D50 inférieure ou égale à 500 µm, de préférence inférieure ou égale à 250 µm, de façon plus préférée inférieure ou égale à 100 µm ou de façon encore plus préférée inférieure ou égale à 50 µm, de manière plus préférée inférieure à 45 µm.

L'additif organique comporte un polymère défloculant présentant une masse moléculaire d'au moins 1000 g/mol et au moins 3 groupements chargés négativement à un pH supérieur à 7. Avantageusement, le polymère défloculant peut comporter des fonction sulfonates. Il peut également comporter des monomères contenant un noyau mélamine, ledit polymère défloculant présentant une chaîne principale formée d'une séquence répétitive où les noyaux mélamine sont liés entre eux par des liaisons covalentes.

En particulier, cette étape de broyage 130 peut être réalisée quelques instants avant l'utilisation de la composition pour liant de construction et son mélange aux autres constituants du liant de construction. Alternativement, l'étape de broyage 130 peut être réalisée bien avant, et la composition pour liant de construction ainsi formée est conservé à l'état sec pour être mélangé ultérieurement avec d'autres composants du liant de construction ou des granulats. De façon préférée, le procédé selon l'invention utilise une composition pour liant formée extemporanément. Alternativement, le procédé selon l'invention utilise un liant formé au moins 6 heures, de préférence au moins 24 heures avant son utilisation et par exemple sur un autre site.

Comme illustré à la figure 1, le procédé de fabrication 100 selon l'invention peut comporter une étape de mélange 140 de la matrice argileuse crue broyée avec d'autres constituants d'un liant de construction. Cela peut par exemple comporter un mélange avec au moins un précurseur et/ou au moins un activateur.

L'étape de mélange 140 peut être réalisée généralement avec un organe de mélange tel un malaxeur ou un mélangeur, par exemple un mélangeur à poudre.

En particulier, comme cela détaillé par la suite, l'étape de mélange 140 peut comporter l'utilisation de trémies, de moyen(s) de pesage, de moyen de dosage volumétrique, de moyens de transport tels que des vis sans fin et/ou des systèmes aérauliques, de mélangeur et/ou de malaxeur.

L'étape de mélange 140 est généralement réalisée sur une durée suffisante pour créer un mélange intime entre les différents constituants de la composition pour liant. Les paramétrages pour arriver à un tel résultat peuvent varier en fonction des constituants du liant.

L'étape de mélange 140 peut comporter un mélange des constituants de la composition pour liant pendant au moins 5 secondes, de préférence pendant au moins 10 secondes, de façon plus préférée pendant au moins 20 secondes et de façon encore plus préférée pendant au moins 30 secondes. Le mélange se fera généralement sur une durée inférieure ou égale à 20 minutes, de préférence pendant au plus 15 minutes, de façon plus préférée pendant au plus 10 minutes et de façon encore plus préférée pendant au plus 5 minutes.

En particulier, l'étape de mélange 140 peut être réalisée en plusieurs sous-étapes. Par exemple, dans un premier temps, le procédé de mélange 140 peut comporter un pré-mélange d'une matrice argileuse crue broyée et d'une composition d'activation, de préférence une composition d'activation alcaline. En outre, lors de ce pré-mélange, le procédé selon l'invention peut avantageusement comporter l'ajout d'une composition d'oxydes métalliques calcinée. De préférence, ce prémélange n'est pas hydraté. Alternativement, le procédé de mélange 140 peut comporter un pré-mélange d'une matrice argileuse crue broyée et d'une composition d'activation, de préférence une composition d'activation alcaline.

Un procédé de fabrication 100 selon l'invention comporte une étape d'ajout d'additifs 150. Les additifs sont par exemple ceux décrits ci-dessus.

Selon un autre aspect, l'invention porte sur un procédé de fabrication 200 d'un matériau de construction selon l'invention.

Le procédé de fabrication 200 selon l'invention peut être mis en oeuvre avec des dispositifs ou systèmes habituellement utilisés pour la fabrication de liant de construction ou de matériaux de construction.

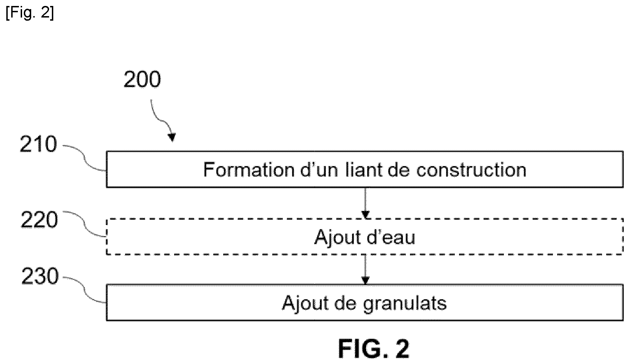

Comme illustré à la figure 2, le procédé de fabrication 200 d'un matériau de construction selon l'invention comporte les étapes suivantes : une étape de formation du liant de construction 210 et une étape d'ajout 230 de granulats.

En outre, le procédé de fabrication 200 d'un matériau de construction selon l'invention peut comporter une étape d'ajout 220 d'eau.

L'étape de formation du liant de construction 210 peut être réalisée à partir de la composition pour liant de construction. Alternativement, la composition pour liant de construction peut être fabriquée au moment de la formation du liant de construction.

L'étape d'ajout 230 de granulats peut être réalisée avec les granulats décrits ci-dessus.

### EXEMPLES

L'invention est décrite plus en détail ci-après en référence aux exemples expérimentaux suivants. Ces exemples sont fournis à des fins d'illustration uniquement et ne sont pas destinés à être limitatifs, sauf indication contraire. Ainsi, l'invention ne doit en aucun cas être interprétée comme étant limitée aux exemples illustratifs suivants, mais doit plutôt être interprétée comme englobant toutes les variations qui deviennent évidentes à la suite de l'enseignement fourni ici.

### Additifs comparatifs

A des fins de comparaison, des additifs organique comparatifs sont utilisés.

En particulier, les additifs organiques suivant sont utilisés :
- A : triisopropanolamine ;
- B : ribose ;
- C : triisopropanolamine + ribose.

### Synthèse de polymères défloculant comportant des noyaux naphtalène sulfonate formant la chaine principale (PNS)

Les polymères défloculant comportant des noyaux naphtalène peuvent être formés par condensation entre le formaldéhyde et un naphtalène substitué ou non, permettant ainsi de former un polymère avec une chaîne principale constituée de noyaux naphtalène.

Les polymères défloculant contenant des monomères à base de naphtalène, présentant une chaîne principale avec des séquences répétitives de noyaux naphtalène liés par des liaisons covalentes, sont synthétisés par une série de trois étapes. La première étape consiste en la fixation de fonctions méthoxyle (-CH₂OH) sur les positions actives du naphtalène par réaction avec le formaldéhyde en milieu alcalin, de préférence à un pH de 8-10.

Ensuite, la sulfonation est réalisée par addition de bisulfite de sodium en milieu alcalin, avec la sulfonation d'un seul des groupements méthoxyle se produisant à un pH de 10.

Enfin, la polymérisation par condensation est effectuée, pouvant être interrompue pour atteindre un degré de polymérisation correspondant à une masse moléculaire moyenne de 2 000 à 25 000 g/mol.

Cette étape est réalisée de préférence à un pH de 5-6 et à une température de 80°C, suivie d'une neutralisation, par exemple par addition de NaOH.

### Synthèse de polymères défloculant comportant des noyaux mélamine formant la chaine principale (PMS)

Les polymères défloculant comportant des groupements mélamine peuvent être formés par condensation entre le formaldéhyde et une mélamine substituée ou non. Cela permet de former un polymère défloculant comportant une chaine principale formée par un enchainement de groupements ou noyaux mélamine.

En particulier, les polymères défloculant comportant des monomères contenant un noyau mélamine, ledit polymère défloculant présentant une chaîne principale formée d'une séquence répétitive où les noyaux mélamine sont liés entre eux par des liaisons covalentes, peuvent être formés par condensation entre le formaldéhyde et des mélamines au travers de trois étapes :
- Fixation de fonctions méthoxyle -CH₂OH sur les fonctions amine -NH₂ de la mélamine par réaction avec le formaldéhyde en milieu alcalin. De préférence, à pH 8-10 ;
- Fixation des sulfonates. Elle est réalisée par addition du bisulfite de sodium en milieu alcalin. La sulfonation d'un seul des groupements méthoxyle se produit lors de l'ajout d'une mole de sulfonate par mole de mélamine à pH=10 ;
- Polymérisation par condensation. La condensation peut être interrompu pour un degré de polymérisation n compris entre 4 et 25, ou par exemple une masse moléculaire moyenne de 2 000 à 25 000 g.mol⁻¹. La condensation est réalisée de préférence à pH 5-6 et 80°C suivi d'une neutralisation par exemple par l'ajout de NaOH de façon à générer un mélange de polymères défloculant présentant un pH légèrement basique.

### Synthèse de polymères défloculant comportant des carboxylates

Les polymères de type PCE (Polycarboxylate) synthétisés sont composés d'une chaîne principale portant des fonctions carboxylates -COO⁻ et sur laquelle peuvent être greffées des chaînes secondaires de type polyéthylène glycol.

Les polycarboxylates PCE sont synthétisés par une polymérisation radicalaire à partir de monomères acryliques tels que de l'acide acrylique et un ester méthacrylique de poly(éthylène glycol) méthoxy. Classiquement, la synthèse comprend trois étapes différentes : initiation, propagation et terminaison. La réaction radicalaire est initiée à partir d'un radical libre, appelé initiateur, lequel réagit avec un acide acrylique pour former un radical acrylique. Dans un ballon est mélangé l'acide acrylique avec un peroxyde (initiateur). Lors de la propagation, le radical acrylique libre réagit avec un autre monomère pour former un radical dimère, lequel réagit à nouveau avec un monomère pour former un radical trimère, et ainsi de suite. Lors de la terminaison, la réaction en chaîne de polymérisation est interrompue au moyen d'un régulateur.

### Caractérisation de la matrice argileuse

La matrice argileuse crue est analysée par Fluorescence-X selon les indications des normes NF EN 196-2 et NF EN 15309

Les essais de fluorescences X sur perles ou pastilles compressées sont réalisés afin de définir la composition chimique d'un échantillon, c'est-à-dire de quantifier ses éléments majeurs et éventuellement ses éléments traces. Les échantillons analysés présentent une granulométrie < 1 mm et sont séchés. La matrice argileuse séchée est conditionnée sous la forme d'une perle ou d'une pastille.

Les résultats obtenus en pourcentage d'oxides concernent les éléments majeurs : Al, Ca, Cr, Fe, K, Mg, Na, P, Pb, Si, Ti, V et W. La perte au feu (LOI) mesurée pendant la confection des échantillons permet de prédire la présence potentielle de matières organiques, carbonates et/ou sulfates, qui sont des éléments pouvant être impactant.

### Préparation de la matrice argileuse

La matrice argileuse est criblée et tamisée à 10 mm. L'humidité de l'argile est mesurée telle que décrit dans la norme ISO 12570:2000.

De façon à illustrer l'effet des granulométries initiales et typologies des matrices argileuses crue sur les propriétés mécaniques des liants de constructions, deux matrices argileuses (A1 et A2) sont utilisées et leurs propriétés sont présentées dans les tableaux 2 et 3 ci-dessous.

**[TABLEAU 2]**

| **Matrice Argileuse** | **D10** | **D50** | **D90** | **Dureté MOHS** |
|---|---|---|---|---|
| A1 | 10 | 70 | 180 | 2à3 |
| A2 | 5 | 40 | 130 | 5 à 7 |

**[TABLEAU 3]**

| **Matrice Argileuse** | **LOI** | **Al₂O₃** | **CaO** | **Fe₂O₃** | **K₂O** | **MgO** | **Na₂O** | **SiO₂** | **SO₃** | **TiO₂** |
|---|---|---|---|---|---|---|---|---|---|---|
| A1 | 7,67 | 10,9 | 6,3 | 9,9 | 1,95 | 6,27 | 2,12 | 48,95 | 3,3 | 1,34 |
| A2 | 12,12 | 9,4 | 10,1 | 7,3 | 1,56 | 4,33 | 1,32 | 47,71 | 4,21 | 0,92 |

### Méthodologie de mesure des propriétés mécaniques des liants de construction

Les liants de construction décrits dans le tableau 3 ci-dessus sont préparés en éprouvette et leur résistance mécanique est mesurée à différents temps.

On entend par résistance mécanique d'une éprouvette, sa résistance à la compression, une telle compression étant mesurée selon la norme NF EN 771-3+A1/CN et est exprimée en Méga Pascal (MPa).

### Calcul du retrait

Le retrait est calculé selon la norme d'essai ciment issue de la NF EN 197-1, méthode classique pour les ciments et réalisée sur mortier normalisé.

### Préparation d'une matrice argileuse crue broyée

Un broyage à sec est réalisé entre une matrice argileuse crue préparée et un polymère défloculant selon l'invention dans des quantités prédéterminées. Dans certains cas plusieurs matrice argileuses crues sont combinées lors de l'étape de broyage. Les résultats présentés concernent un ajout avant le broyage mais des résultats similaires sont obtenus lors de l'ajout pendant le broyage.

### Préparation d'un liant de construction puis d'un matériau pour liant de construction

La matrice argileuse crue broyée décrite ci-dessus est combinée dans un malaxeur avec un laitier de hauts fourneaux et un activateur (e.g. clinker) et de l'eau. Les mélanges sont réalisés de telle sorte que le liant de construction comporte 40% en poids de matrice argileuse crue broyée ; 25 % en poids de laitiers de hauts fourneaux ; 35% en poids CEM I (mélange à 95% de clinker et 5% de gypse en moyenne)

Alternativement, la préparation de la composition est directement suivie par la préparation du liant. Dans ce cas, un prémélange à sec est réalisé entre une matrice argileuse crue broyée selon l'invention dans des quantités prédéterminées, puis le laitier, le CEM I/ciment Portland et l'eau sont ajoutés.

L'ensemble est mélangé à basse vitesse, c'est-à-dire sensiblement à soixante tours par minute pendant trente secondes. Ensuite, du sable est ajouté et le tout est mélangé à plus grande vitesse, c'est-à-dire à environ 120 tours par minute pendant une minute. Le rapport massique eau sur matières sèches du liant de construction est ajusté à une valeur comprise entre 0,4 et 0,6. Dans un exemple particulier, le matériau de construction, un mortier, comporte 25% en poids de liant, 75 % en poids de sable ; ce mélange étant complété par de l'eau pour un rapport massique eau sur matières sèches du liant ajusté à une valeur de 0,45.

Le mortier à base du liant de construction ainsi fabriqué est ensuite coulé dans un moule puis laissé à maturation à température ambiante, c'est-à-dire environ 20 degrés Celsius pendant vingt-huit jours dans l'eau. Alternativement, le mortier peut être coulé dans un moule puis laissé à maturation pendant moins de vingt-quatre heures dans une étape de cure, à température ambiante, c'est-à-dire environ 25 degrés Celsius ou de préférence sous traitement thermique. Lors de cette étape de cure, le moule peut être rendu hermétique ou la couche supérieure du matériau de construction peut être recouverte d'un produit de cure pour en limiter/empêcher l'évaporation.

Le tableau 4 ci-dessous présente, pour différentes formulations de liants de construction huit formulations comparatives (REFO, REF1, REF2, REF3, REF4, REF5, REF6, REF7) et cinq formulations selon l'invention (EXP1, EXP2, EXP3, EXP4, EXP5).

**[Tableau 4]**

| **Nom de la composition** | **Additif organique** | **Quantité totale d'additif organique (sur** argile) | **Matrice argileuse crue utilisée** |
|---|---|---|---|
| REF0 - A1 | na (pas de polymère défloculant) | 0% | A1 |
| REF0 - A2 | na (pas de polymère défloculant) | 0% | A2 |
| REF1 - A1 | A - triisopropanolamine - ajouté pendant le broyage | 3% | A1 |
| REF2 - A1 | B - ribose - ajouté pendant le broyage | 3% | A1 |
| REF3 - A1 | C - triisopropanolamine + ribose-ajouté pendant le broyage | 3% (1.5% + 1.5%) | A1 |
| REF4 - A1 | PNS - 6 000 g/mol - ajouté après le broyage | 3% | A1 |
| REF5 - A1 | PNS - 500 g/mol - ajouté pendant le broyage | 3% | A1 |
| REF6 - A1 | PMS - 500 g/mol - ajouté pendant le broyage | 3% | A1 |
| REF1 - A2 | A - triisopropanolamine - ajouté pendant le broyage | 3% | A2 |
| REF2 - A2 | B - ribose - ajouté pendant le broyage | 3% | A2 |
| REF3 - A2 | C - triisopropanolamine + ribose - ajouté pendant le broyage | 3% (1.5% + 1.5%) | A2 |
| REF4 - A2 | PNS - 6 000 g/mol - ajouté **après** le broyage | 3% | A2 |
| REF5 - A2 | PNS - 500 g/mol - ajouté pendant le broyage | 3% | A2 |
| REF6 - A2 | PMS - 500 g/mol - ajouté pendant le broyage | 3% | A2 |
| EXP1 - A1 | PNS - 6 000 g/mol - ajouté pendant le broyage | 3% | A1 |
| EXP1 - A2 | PNS - 9 000 g/mol - ajouté pendant le broyage | 3% | A2 |
| EXP2 - A1 | PMS - 6 000 g/mol - ajouté pendant le broyage | 3% | A1 |
| EXP2 - A2 | PMS - 9 000 g/mol - ajouté pendant le broyage | 3% | A2 |
| EXP3 - A1 | PNS - 1 000 g/mol - ajouté avant le broyage | 3% | A1 |
| EXP3 - A2 | PNS - 1 000 g/mol - ajouté avant le broyage | 3% | A2 |
| EXP4 - A1 | PMS - 1 000 g/mol - ajouté avant le broyage | 3% | A1 |
| EXP4 - A2 | PMS - 1 000 g/mol - ajouté avant le broyage | 3% | A2 |
| EXP5 - A1 | Polycarboxylate - 1000 g/mol - ajouté avant le broyage | 3% | A1 |
| EXP5 - A2 | Polycarboxylate - 1000 g/mol - ajouté avant le broyage | 3% | A2 |

### Méthodologie de mesure des propriétés mécaniques des liants de construction :

Une fois la maturation terminée, la résistance mécanique est mesurée. On entend par résistance mécanique d'un liant de construction, sa résistance à la compression, une telle compression étant mesurée selon la norme NF EN 196-1, pour un prisme de 40 millimètres de côté et 160 millimètres de longueur et est exprimée en Méga Pascal (MPa).

### Comparaison des liants de construction selon l'invention aux liants de construction connus

Le tableau 5 ci-dessous présente les résultats des résistances mécaniques à 1 jour et à 28 jours ainsi que le retrait à 90j en fonction des formulations utilisées lors du broyage.

**[Tableau 5]**

| ***ID*** | ***Rc** 1j (MPa)* | ***Rc 28j** (MPa)* | ***Retrait 90j** (µm*/*m)* |
|---|---|---|---|
| *REF0 - A1* | <10 | <25 | *< -2200* |
| *REF1 - A1* | *<12* | *25<x<45* | *-2200<x<-2000* |
| *REF2 - A1* | *<12* | *25<x<45* | *-2200<x<-2000* |
| *REF3 - A1* | *<12* | *25<x<45* | *-2200<x<-2000* |
| *REF4 - A1* | *<12* | *35<x<45* | *-2200<x<-2000* |
| *REF5 - A1* | *<12* | *35<x<45* | *-2200<x<-2000* |
| *REF6 - A1* | *<12* | *35<x<45* | *-2200<x<-2000* |
| ***EXP1- A1*** | **>12** | **>45** | **> -1800** |
| ***EXP2- A1*** | **>12** | **>45** | **> -1800** |
| ***EXP3 - A1*** | **>12** | **>35** | **> -2000** |
| ***EXP4 - A1*** | **>12** | **>35** | **> -2000** |
| ***EXP5** - **A1*** | **>10** | **>30** | **> -1800** |
| *REFO - A2* | *<10* | *<20* | *< -2800* |
| *REF1 - A2* | *<10* | *20<x<35* | *-2800<x<-2000* |
| *REF2 - A2* | *<10* | *20<x<35* | *-2800<x<-2000* |
| *REF3 - A2* | *<10* | *20<x<35* | *-2800<x<-2000* |
| *REF4 - A2* | *<10* | *30<x<35* | *-2800<x<-2000* |
| *REF5 - A2* | *<10* | *30<x<35* | *-2800<x<-2000* |
| *REF6 - A2* | *<10* | *30<x<35* | *-2800<x<-2000* |
| ***EXP1 - A2*** | **>12** | **>45** | **>-1300** |
| ***EXP2 - A2*** | **>12** | **>50** | **> -1750** |
| ***EXP3 - A2*** | **>12** | **>40** | **> -1500** |
| ***EXP4 - A2*** | **>12** | **>45** | **> -1800** |
| ***EXP5 - A2*** | **>10** | **>30** | **> -1800** |

Si l'on compare les propriétés mécaniques du matériau de construction préparé à partir de matrice argileuse crue broyée en absence d'additif organique (REFO, REF4) et en présence d'additif organique (REF1, REF2, REF3, REF5, REF6, EXP1, EXP2, EXP3, EXP4, EXP5), le tableau 5 ci-dessus illustre que la présence des défloculants testés dans l'additif organique utilisé lors du broyage (EXP1, EXP2, EXP3 et EXP4, EXP5) apporte une amélioration du retrait pour les deux argiles testées (A1 et A2). Ce tableau illustre également un effet pour les polymères défloculants ayant une masse moléculaire inférieure à 1000 g/mol (REF5 et REF6) mais cet effet reste inférieur à celui observable dans les exemples selon l'invention (EXP1, EXP2, EXP3, EXP4 et EXP5). Ce tableau illustre également les meilleures performances lors de la présence d'un groupement sulfonate par rapport à un groupement carboxylate.

La comparaison des performances des additifs organiques en fonction des argiles illustre que l'ajout d'un polymère défloculant selon l'invention permet d'améliorer les propriétés mécaniques du matériau de construction pour l'argile 1 et pour l'argile 2.

L'amélioration apportée par le PMS est particulièrement forte sur l'argile 2.

L'étude des formulations selon la présente invention illustre que le broyage d'une matrice argileuse crue en présence d'un polymère défloculant répondant à certaines caractéristiques permet d'atteindre des valeurs de retrait à 90j inférieur à 2000 mm (pour les argiles A1 et A2).

En outre, l'ajout d'un polymère défloculant pendant le broyage d'une argile ayant une dureté MOHS de 5 à 7 offre de meilleures performances mécaniques, notamment en termes de retrait.

La pertinence de l'utilisation d'un polymère défloculant en combinaison d'un mélange entre deux matrices argileuses crues différentes peut également être évaluée.

Pour ce faire les différentes formulations sont réalisées de la même manière que vu précédemment, excepté que les argiles A1 et A2 sont mélangées entre elles en quantité identique.

Le tableau 6 ci-dessous illustre, une formulation comparative (REF0') et une formulation selon l'invention (EXP1').

**[Tableau 6]**

| **Nom de la composition** | **Additif organique** | **Quantité totale d'additif organique (sur argile)** |
|---|---|---|
| REF0' - A1A2 | na (pas de polymère défloculant) | 0% |
| EXP1' - A1A2 | PNS - 6 000 g/mol - ajouté avant le broyage | 3% |

Le tableau 7 ci-dessous illustre des résultats des résistances mécaniques à 1 jour et à 28 jours ainsi que le retrait à 90j en fonction des formulations utilisées lors du broyage.

**[Tableau 7]**

| ***ID*** | ***Rc 1j** (MPa)* | ***Rc 28j** (MPa)* | ***Retrait 90j** (µm*/*m)* |
|---|---|---|---|
| *REFO' - A 1A2* | <10 | <25 | *< -2800* |
| *EXP1' - A1A2* | **>14** | **>50** | > **-1200** |

En outre, l'ajout d'un polymère défloculant pendant le broyage d'une argile ayant une dureté MOHS de 5 à 7 et d'une argile ayant une dureté MOHS inférieure à 5 permet d'améliorer les performances mécaniques.

L'invention peut faire l'objet de nombreuses variantes et applications autres que celles décrites ci-dessus. En particulier, sauf indication contraire, les différentes caractéristiques structurelles et fonctionnelles de chacune des mises en œuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Utilisation d'un additif organique pendant le broyage d'au moins une matrice argileuse crue, **caractérisée en ce que** l'additif organique comporte un polymère défloculant présentant une masse moléculaire d'au moins 1000 g/mol et au moins 3 groupements chargés négativement à un pH supérieur à 7.

2. Utilisation d'un additif organique selon la revendication 1, **caractérisée en ce que** le polymère défloculant présente une masse moléculaire d'au moins 2000 g/mol, de préférence au moins 5000 g/mol, de façon plus préférée au moins 9 000 g/mol, de façon encore plus préférée au moins 14 000 g/mol, par exemple au moins 22 000 g/mol,

3. Utilisation d'un additif organique selon l'une des revendications 1 ou 2, **caractérisée en ce que** le polymère défloculant présente au moins 5, de préférence au moins 7, de façon plus préférée au moins 9, de façon encore plus préférée au moins 10 groupements chargés négativement à un pH supérieur à 7.

4. Utilisation d'un additif organique selon l'une quelconque des revendications 1 à 3, **caractérisée en ce que** le polymère défloculant présente un rapport masse moléculaire sur nombre de groupements chargés négativement à un pH supérieur à 7, inférieur ou égal à 2000.

5. Utilisation d'un additif organique selon l'une quelconque des revendications 1 à 4, **caractérisée en ce que** le polymère défloculant présente un rapport masse moléculaire sur nombre de groupements chargés négativement à un pH supérieur à 7, supérieur ou égal à 200.

6. Utilisation d'un additif organique selon l'une quelconque des revendications 1 à 5, **caractérisé en ce que** le polymère défloculant a été formé à partir de monomères comportant un groupement mélamine sulfonate.

7. Utilisation d'un additif organique selon l'une quelconque des revendications 1 à 6, **caractérisé en ce que** le broyage est un broyage à sec, c'est-à-dire que lors du broyage la matrice argileuse crue présente une teneur en eau inférieure ou égale à 5%.

8. Utilisation d'un additif organique selon l'une quelconque des revendications 1 à 7, caractérisé en ce l'additif organique comporte en outre des alkanolamines et/ou des triethanolamines telles que triisopropanolamine (TIPA), triethanolamine (TEA), et diethanolisopropanolamine (DEIPA).

9. Utilisation d'un additif organique selon l'une quelconque des revendications 1 à 8, **caractérisé en ce que** le broyage est réalisé sur une ou plusieurs matrices argileuses crues et **en ce que** au moins une matrice argileuse crue comporte des nodules de matière avec une dureté de MOHS supérieure ou égale à 5.

10. Utilisation d'un additif organique selon l'une quelconque des revendications 1 à 8, **caractérisé en ce que** le broyage est réalisé sur plusieurs matrices argileuses crues et **en ce qu'**au moins une matrice argileuse crue comporte des nodules de matière avec une dureté de MOHS supérieure ou égale à 5 tandis qu'au moins une matrice argileuse crue ne comporte pas de nodules de matière avec une dureté de MOHS supérieure ou égale à 5.

11. Utilisation d'un additif organique selon l'une quelconque des revendications 1 à 10, **caractérisé en ce que** l'additif organique est ajouté à une première matrice argileuse crue puis ladite première matrice argileuse crue est co-broyée avec une autre matrice argileuse crue.

12. Matrice argileuse crue broyée susceptible d'être obtenue suite à une utilisation selon l'une quelconque des revendications 1 à 11.

13. Matrice argileuse selon la revendication 12 **caractérisée en ce qu'**elle présente une D10 comprise entre 3 et 9 µm, une D50 comprise entre 15 et 250 µm, et une D90 comprise entre 110 et 180 µm.

14. Procédé (100) de fabrication d'un liant de construction comportant :
- une étape de broyage (130) d'une matrice argileuse crue en présence d'un additif organique, l'additif organique comportant un polymère défloculant présentant une masse moléculaire d'au moins 1000 g/mol et au moins 3 groupements chargés négativement à un pH supérieur à 7 ;
- une étape de mélange (140) de la matrice argileuse crue broyée avec d'autres constituants du liant de construction, par exemple mélange avec au moins un précurseur et/ou mélange de la matrice argileuse crue broyée avec au moins un activateur.

15. Liant de construction susceptible d'être obtenu par le procédé de fabrication selon la revendication 14, ledit liant comprenant un liant de construction comprenant une matrice argileuse crue broyée présentant une D10 comprise entre 3 et 9 µm, une D50 comprise entre 15 et 250 µm, et une D90 comprise entre 110 et 180 µm ; un additif organique comportant un polymère défloculant présentant une masse moléculaire d'au moins 1000 g/mol et au moins 3 groupements chargés négativement à un pH supérieur à 7 ; ainsi qu'un ou plusieurs activateurs et/ou un ou plusieurs précurseurs.
